Europäisches Patentamt

European Patent Office

Office européen des brevets

(11) Numéro de publication: **0 125 153**
**B1**

(12) **FASCICULE DE BREVET EUROPEEN**

(45) Date de publication du fascicule du brevet: **14.12.88**

(21) Numéro de dépôt: **84400523.1**

(22) Date de dépôt: **14.03.84**

(51) Int. Cl.⁴: **B 05 B 7/14,** B 05 D 1/12,
B 05 C 19/00, C 03 C 17/23

(54) Procédé et dispositif de distribution régulière d'un solide pulvérulent sur un substrat en vue de son revêtement et substrat ainsi revêtu.

(30) Priorité: **14.03.83 FR 8304124**
**14.03.83 FR 8304125**

(43) Date de publication de la demande:
**14.11.84 Bulletin 84/46**

(45) Mention de la délivrance du brevet:
**14.12.88 Bulletin 88/50**

(84) Etats contractants désignés:
**AT BE CH DE FR GB IT LI LU NL SE**

(56) Documents cités:
**EP-A-0 012 679**
**DE-A-2 753 268**
**DE-A-3 117 715**
**FR-A-2 277 049**
**FR-A-2 427 141**
**GB-A-2 081 136**

(73) Titulaire: **SAINT-GOBAIN VITRAGE**
**Les Miroirs 18, avenue d'Alsace**
**F-92400 Courbevoie (FR)**

(72) Inventeur: **Coulon Jean-Claude**
**Ruelle de Brintet**
**F-71640 Mercurey (FR)**
Inventeur: **Douche, Jean-Pierre**
**6 route Nationale**
**F-60150 Thourotte (FR)**
Inventeur: **Kramer, Carl**
**Am Chorusberg 8**
**D-5100 Aachen (DE)**
Inventeur: **Kuster, Hans-Werner**
**Augustastrasse 68**
**D-5100 Aachen (DE)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

## Description

La présente invention se rapporte à la distribution homogène d'un produit pulvérulent à travers une fente, sur un substrat, notamment du verre, en vue de son revêtement par une pellicule à propriétés particulières notamment optiques ou électriques.

Il est connu par le brevet FR 2 427 141 de distribuer en continu sur un substrat tel qu'un ruban de verre des produits pulvérulents en suspension dans un gaz, au travers d'une fente de distribution disposée au dessus du verre. Ladite fente est l'extrémité basse d'une buse qui comprend une cavité s'étendant sur toute la longueur de la buse ayant en coupe transversale une forme de venturi, alimentée par une pluralité de conduits élémentaires de même longueur résultant de la subdivision d'un conduit unique d'alimentation en poudre en suspension dans un gaz, une large chambre d'homogénéisation approximativement parallélépipédique s'étendant sur toute la longueur de la buse dans laquelle débouche la cavité en forme de venturi et recevant également du gaz sous pression réalisant des turbulences destinées à homogénéiser le mélange de poudre et de gaz, puis faisant suite à la chambre d'homogénéisation et en communication avec elle par un passage étroit s'étendant sur toute la longueur de la buse, un divergent puis un convergent qui aboutit à la fente de distribution.

Cette buse donne des résultats intéressants mais elle est malgré tout assez sensible à l'encrassement et nécessite périodiquement un nettoyage pour continuer à fonctionner correctement ce qui entraine une perte de production. D'autre part elle est prévue pour une longueur de fente de distribution de 250 à 650 mm, et pour revêtir des rubans de verre de plusieurs mètres de largeur on doit disposer bout à bout plusieurs buses identiques. Un problème d'absolue identité ou d'équilibrage des différentes buses ainsi associées se pose alors pour assurer une distribution régulière sur toute la largeur du verre. Il serait préférable de disposer d'une seule buse ayant une fente de distribution d'une longueur égale aux plusieurs mètres de largeur du ruban de verre, mais on constate que lorsqu'on augmente de façon importante la longueur de la buse, la régularité de distribution est perturbée, notamment la trace des alimentations de poudre par les conduits élémentaires se retrouve sur le verre et l'encrassement est plus rapide.

La présente invention vise à remédier à ces inconvénients et elle propose pour cela un procédé et un dispositif permettant de recouvrir plusieurs mètres de largeur de substrat en particulier toute la largeur d'un ruban de verre fabriqué sur une installation "float", dans lesquels l'encrassement est évité, et grâce auxquels la régularité de distribution dans le temps et dans l'espace est obtenue.

Pour obtenir la régularité de distribution souhaitée sur un substrat de plusieurs mètres de largeur, le procédé selon l'invention dans lequel on introduit la poudre en suspension dans un gaz porteur à l'intérieur d'une buse et dans lequel on forme une lame de ladite poudre en suspension dans un gaz à proximité et sensiblement à l'aplomb du substrat est caractérisé en ce qu'on forme ladite lame de poudre en suspension dans un gaz dès son introduction dans la buse, en ce qu'on maintient ladite lame en écoulement continu en direction du substrat sur toute sa longueur, en ce qu'on introduit des courants gazeux dans cette lame pour y créer des turbulences et homogénéiser le mélange de gaz et de poudre au fur et à mesure qu'il progresse vers le substrat, en ce qu'on accélère régulièrement le mouvement de la poudre vers le substrat en l'entraînant par des courants gazeux additionnels introduits sur ses flancs en direction du substrat.

Dans une première variante, l'invention propose de réaliser l'homogénéisation et l'accélération en deux étapes successives.

Dans une seconde variante, elle propose de réaliser l'homogénéisation et l'accélération en une seule et même étape.

L'invention propose également des buses dans lesquelles le procédé est mis en oeuvre.

Ces buses de projection de poudre sur un support comportant une ouverture qui les traverse de part en part et qui est terminée par une fente de distribution longitudinale, sont caractérisées en ce que ladite ouverture a au moins une zone dite zone d'accélération précédant immédiatement la fente de distribution, constamment convergente formée par deux parois en regard l'une de l'autre, faiblement espacées délimitant un espace en forme de lame, dans l'entrée duquel débouche au moins un conduit d'alimentation en poudre, dans l'entrée duquel débouche également sur ses flancs, le long de ses parois latérales des fentes d'amenée d'un gaz dit d'accélération, dirigées vers l'autre extrémité desdites buses.

Dans une première variante, cette zone régulièrement convergente est précédée d'une autre zone dite zone d'homogénéisation alimentée en poudre distribuée par des conduits séparés et recevant au même niveau des courants de gaz chargés de créer des turbulences pour homogénéiser la répartition de la poudre.

Dans une seconde variante cette zone est unique, elle est directement alimentée par des moyens fournissant la poudre, par exemple des conduits séparés, mais elle est ouverte à l'atmosphère extérieure, et les gaz supplémentaires injectés à son entrée et, dans une configuration particulière où la buse est au dessus du substrat, à sa partie supérieure, accélèrent la poudre vers l'extrémité de sortie, soit vers le bas lorsque la buse est au dessus du substrat, tout en induisant l'entrée de gaz extérieurs qui favorisent l'homogénéisation.

Grâce à l'invention, on peut employer la technique de revêtement à l'aide de poudre pour obtenir des substrats recouverts de revêtements d'épaisseurs très régulières, les variations d'épaisseur des revêtements étant inférieures à 50 Angstroems et même de l'ordre de 30 à 40 Angstroems.

L'invention propose ainsi des substrats en verre portant des revêtements obtenus selon le procédé de l'invention, et ayant une telle régularité d'épaisseur que les variations de transmission lumineuse au travers de ces substrats sont seulement de l'ordre de 1%.

Les revêtements obtenus peuvent aussi être très minces, inférieurs à 0,l micron et même de l'ordre de 400 à 800 Angströms.

Grâce à cette technique peuvent même être fabriqués industriellement, c'est-à-dire avec un rendement important, des vitrages revêtus d'une couche interférentielle du 2ème ordre, de couleur bleue, dont la longueur d'onde dominante en réflexion est 480 nanomètres (nm) et en transmission 575 nm lorsque éclairée par l'illuminant étalon C.

Les couches interférentielles d'autres couleurs peuvent à fortiori être obtenues aussi puisqu'elles autorisent des variations d'épaisseur plus importantes sans perception de l'altération de la couleur.

L'invention sera maintenant décrite en référence aux figures qui représentent:

Figure 1: une buse suivant l'invention comportant une zone d'accélération et une zone d'homogénéisation superposées, montrée en coupe transversale.

Figure 2: une variante de buse conforme à l'invention comportant deux zones d'accélération et d'homogénéisation superposées montrée en coupe transversale.

Figure 3: une buse suivant l'invention, en coupe transversale, dans laquelle les deux zones d'accélération et d'homogénéisation sont confondues.

Figure 4: une vue partielle en coupe longitudinale au niveau des conduits d'alimentation en poudre de la buse de la figure 1.

Figure 5: une vue partielle en coupe longitudinale au niveau des conduits d'alimentation de la buse montrée figure 2.

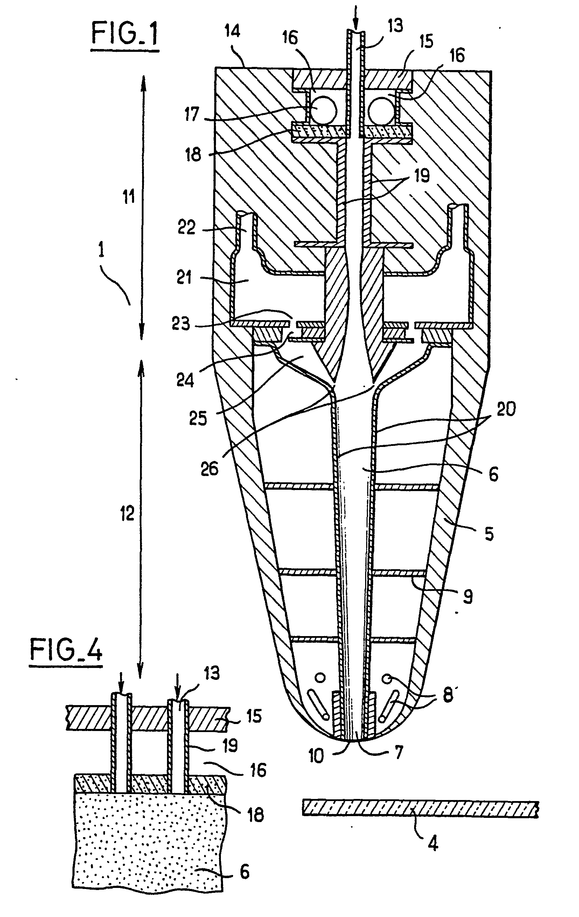

Les figures 1, 2 et 3 montrent en coupe transversale des buses 1 et 3 de distribution de poudre conformes à l'invention. Chacune s'étend au dessus de toute la largeur, pouvant aller d'une cinquantaine de centimètres à plusieurs mètres, d'un substrat 4 à revêtir par la poudre, le substrat et la buse étant animés d'un mouvement de translation l'un par rapport à l'autre. Ce substrat 4 sera notamment un ruban de verre défilant à vitesse uniforme sous la buse 1, 2 ou 3 maintenue fixe.

Chaque buse 1, 2 ou 3 est formée d'un corps 5, traversé sur toute sa hauteur et toute sa longueur, par une ouverture 6 étroite dans laquelle devra circuler la poudre et qui se termine à l'extrémité de sortie, ou basse dans la configuration représentée, par une fente 7 de distribution. La largeur de cette ouverture n'est que de l'ordre du 1/50ème au 1/100ème de sa hauteur et ses variations sont relativement peu importantes et restent de toute façon continues et régulières. Cette ouverture 6 est alimentée, d'une part en poudre à distribuer à son extrémité d'entrée, notamment supérieure dans la configuration représentée, d'autre part en divers courants gazeux.

Des plaques latérales 10 ferment chaque buse 1, 2 ou 3 à ses extrémités dans la direction de sa longueur.

Le corps 5 de buse renferme, plus spécialement dans sa portion proche de la sortie, ou basse dans la configuration représentée, des organes de refroidissement tels que 8, par exemple des circuits d'eau, pour éviter l'échauffement trop important du nez de buse du fait de la proximité du support 4 généralement porté à température élevée en vue du revêtement par la poudre.

Le corps 5 de buse comporte également divers renforts ou entretoises tels que 9 assurant son indéformabilité.

Egalement on prévoit des tirants, non représentés sur les figures, agissant sur les parois en regard qui délimitent l'ouverture 6, ces tirants répartis sur la hauteur de l'ouverture permettant un réglage précis de la largeur de ladite ouverture et renforçant aussi l'indéformabilité.

Chaque buse est disposée de façon que son extrémité basse, ou plus généralement de sortie, soit à une distance du substrat à revêtir d'environ 15 à 120 mm, et de préférence voisine de 30 mm.

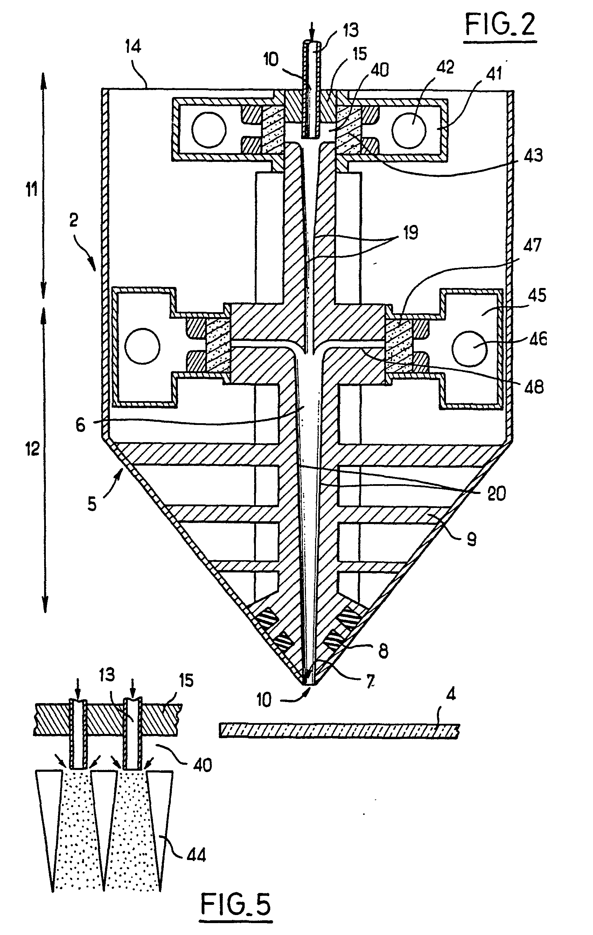

Les buses 1 et 2 illustrées par les figures 1 et 2 comportent deux zones superposées en hauteur, une zone d'entrée, toujours dans la configuration représentée, supérieure 11, dite d'homogénéisation et une zone inférieure 12 dite d'accélération, au travers desquelles l'ouverture 6 se prolonge. Dans les deux cas de figure, l'ouverture 6 est alimentée à sa partie d'entrée ou supérieure, en poudre, généralement en suspension dans un gaz primaire tel que l'air, par une pluralité de conduits 13 d'alimentation répartis dans la direction de la longueur de la buse, par exemple régulièrement répartis à environ 5 cm les uns des autres et qui pénètrent au travers de la paroi supérieure 14 du corps 5 de buse, l'étanchéité autour de ces conduits 13 étant obtenue à l'aide d'un couvercle à trous 15.

Dans la buse 1 (figure 1), ces conduits 13 se prolongent de façon à traverser une boîte à gaz, notamment à air, 16 qui, dans la configuration représentée, surmonte l'ouverture 6 sur toute sa longueur, et à déboucher dans l'ouverture 6. Cette boîte à gaz ou à air 16 est alimentée en gaz ou en air sous pression par des rampes à trous 17 et son fond 18 étant une plaque poreuse du type "Poral", ce gaz ou cet air est introduit dans l'ouverture 6 de manière sensiblement uniforme sur toute sa longueur.

La figure 4 montre en coupe longitudinale, c'est-à-dire suivant un plan médian disposé suivant la longueur de la buse, l'arrivée des conduits 13 dans l'ouverture 6 après traversée de la boîte à gaz ou à air 16.

Des jets de poudre en suspension dans un gaz primaire, en général de l'air, sont introduits avec vitesse, notamment à intervalles de distance réguliers dans l'ouverture 6 par les conduits 13.

Grâce au gaz, en particulier à l'air qui diffuse au travers de la plaque 18 du type "Poral", des turbulences, qui uniformisent la répartition de la poudre sur toute la longueur de la buse et qui homogénéisent le mélange primaire de gaz, ou d'air, et de poudre, fourni par les conduits 13, sont créées dans la zone 11, et la face de plaque "Poral" 18 qui forme le plafond de cette zone 11 de l'ouverture 6 est nettoyée de tout éventuel encrassement.

Dans la buse 2 de la figure 2, une variante d'introduction de l'air d'homogénéisation est présentée. Les conduits 13 d'alimentation en poudre en suspension dans un gaz, l'air notamment, ne traversent plus de boite à gaz, mais pénètrent directement dès la traversée de la paroi supérieure 14 du corps 5 de buse, dans une chambre 40 relativement large, s'étendant sur toute la longueur de la buse 2 et constituant la partie supérieure de la zone 11 de l'ouverture 6.

Le gaz d'homogénéisation, en général de l'air, est fourni à cette chambre 40 par deux réservoirs 41 identiques, alimentés en gaz sous pression par des rampes à trous 42, disposés de chaque côté de la chambre 40 sur toute sa longueur et communiquant avec elle par l'intermédiaire de la paroi latérale 43 que chacun a en commun avec elle, ladite paroi 43 étant en un matériau poreux du type "Poral". Au sortir de la chambre 40, la largeur de l'ouverture 6 se rétrécit et les conduits 13 d'alimentation descendent dans la chambre 40 jusqu'à affleurer le niveau du rétrécissement. Comme montré sur la coupe longitudinale de la figure 5, des lamelles 44 en forme de prisme, disposées transversalement, cloisonnent des jets de poudre issus de chaque conduit 13 et maintiennent une section de passage sensiblement constante quand la poudre libérée par les conduits 13 pénètre dans l'ouverture 6 évitant ainsi des variations de vitesse de la poudre et les dépôts qui pourraient en résulter sur les parois. Le gaz d'homogénéisation de la même façon que pour la buse 1, uniformise la répartition de la poudre sur toute la longueur de la buse, homogénéise le mélange primaire de gaz et de poudre en suspension fourni par les conduits 13, et agit contre les dépôts de poudre.

Dans les deux buses 1 et 2 montrées respectivement sur les figures 1 et 2, la poudre après avoir été libérée par les conduits 13 dans l'ouverture 6, subissant l'action de gaz et en particulier d'air d'homogénéisation, forme une veine de poudre en suspension dans ce gaz et en particulier dans l'air, en forme de lame, c'est-à-dire une veine continue peu épaisse, ayant la longueur de la buse, qui s'étend vers le bas de la buse dans la configuration représentée, entre les parois 19 sensiblement verticales de la zone 11 de l'ouverture 6. Sous l'effet du gaz d'homogénéisation et également sous l'effet de l'éloignement de plus en plus important vis-à-vis des conduits d'alimentation, l'homogénéisation du mélange de gaz et de poudre et l'uniformité de sa répartition à l'intérieur de l'ouverture 6 se réalisent et s'améliorent au fur et à mesure de la progression de la poudre. Avantageusement dans les deux buses 1 et 2, les deux parois 19 de l'ouverture 6 qui se font face dans la zone 11 d'homogénéisation convergent légèrement l'une vers l'autre. Il en résulte une légère accélération de la poudre et un laminage de la veine en forme de lame, qui améliorent encore l'homogénéité et l'uniformité de la répartition.

Dans la buse 1 de la figure 1, une légère divergence des deux parois 19 fait immédiatement suite à la convergence mentionnée ci-dessus. Cette succession de convergence et de divergence d'une part et l'accélération et ensuite le ralentissement de la poudre qui en résultent d'autre part, améliorent encore l'homogénéisation et la répartition uniforme de la poudre.

On peut considérer qu'à ce niveau, dans les deux buses 1 et 2, à l'extrémité de la zone 11 d'homogénéisation, le mélange de poudre et de gaz, d'air en particulier, est homogène et uniformément réparti sur toute la surface de l'ouverture 6. Ainsi, grâce à cette zone 11, on a pu passer d'une répartition de poudre en jets séparés délivrés par les conduits 13 à une répartition uniforme.

La poudre pénètre ensuite dans la zone 12 d'accélération. Pour obtenir un recouvrement suffisant du substrat 4 en un temps court, particulièrement nécessaire dans le cas du déplacement rapide dudit substrat, pour obtenir une bonne adhérence de la poudre sur le substrat, pour éviter l'envol de la poudre entre le moment où elle est libérée par la fente 7 de distribution à l'extrémité basse de la buse et le moment où elle entre en contact avec le substrat, il est important de conférer à la poudre une vitesse verticale de chute, ou plus généralement de progression vers le substrat 4, à sa sortie de la buse qui soit au moins de l'ordre de 10 à 15 m/s. D'autre part, dans la mesure où la réaction de la poudre sur le substrat 4 nécessite une température élevée, il est également important de ne pas trop refroidir le substrat et on doit donc limiter le débit du gaz porteur de poudre.

Ainsi par exemple dans le cas de projection de poudres de composés organo-métalliques du type DBTO (oxyde de dibutyl étain) ou DBTF (difluorure de dibutyl étain) de granulométrie supérieure à 5 microns et inférieure à 40 microns, sur des substrats en verre, en vue de la décomposition de ces composés en oxydes métalliques, notamment oxyde d'étain, sous l'effet de la chaleur, pour former une pellicule à propriétés optiques et/ou électriques particulières, les vitesses d'impact de la poudre sur le verre seront au moins égale à 10 m/s et avantageusement comprises entre 25 et 45 m/s.

Dans les deux buses 1 et 2 présentées sur les figures 1 et 2, l'accélération de la poudre en suspension dans ce gaz, l'air notamment, et contenue dans la veine en forme de lame, est obtenue dans la zone 12 d'accélération, par injection de gaz et en particulier d'air supplémentaire à vitesse élevée sur les flancs de la lame de produit, sur toute la longueur de la buse, et/ou par convergence de la portion 20 des parois 19 en regard de la zone 12 de l'ouverture 6.

Avantageusement, pour éviter les turbulences susceptibles de créer des encrassements et de détruire l'homogénéité et l'uniformité de répartition du mélange de poudre dans le gaz, et en particulier dans l'air, la convergence est régulière de façon à conférer une accélération constante. Ainsi les deux parois 20 sont des parois planes faisant un angle de l'ordre de 7 ou 8° avec le plan médian et délimitant à leur extrémité une fente de distribution d'environ 4 mm de largeur, c'est-à-dire 3 à 4 fois plus étroite que l'entrée de la zone d'accélération.

Dans la buse 1 montrée sur la fig. 1, le gaz et en particulier l'air supplémentaire sous pression est introduit dans des cavités 21 par des rampes 22, chaque cavité communiquant par l'intermédiaire d'un orifice 23 ayant la forme d'une fente s'étendant sur toute la longueur de la buse et d'un évidement à chicane 24, avec une chambre latérale 25 accolée à l'ouverture 6 au niveau du début de la zone d'accélération 12. Chaque chambre latérale 25, communique avec l'ouverture 6 par une fente étroite 26, située au niveau de l'extrémité du divergent de la fin de la zone d'homogénéisation 11, introduisant ainsi sur chaque flanc de la lame de mélange de poudre en suspension dans son gaz porteur, du gaz et en particulier de l'air supplémentaire, pariétal, à vitesse élevée, qui accélère le mélange.

Les pertes de charges que constituent les orifices étroits 23, l'évidement à chicane 24, sur cette alimentation en gaz additionnel permettent d'injecter dans l'ouverture 6, un débit de gaz uniforme sur toute la longueur.

Dans la buse 2 montrée figure 2, des cavités 45 alimentées en gaz sous pression par des rampes à trous 46, enfermées dans le corps 5 de la buse sont disposées approximativement à mi hauteur de la buse et communiquent avec l'ouverture 6 par l'intermédiaire d'une plaque poreuse 47 de type "Poral", puis d'une fente 48.

Les deux fentes 48 débouchent de chaque côté de la lame de produit issu de la zone d'homogénéisation et le gaz est injecté à la même vitesse que la lame de poudre en suspension. La réunion de ces trois courants nécessite une largeur d'ouverture 46 approximativement 3 fois plus importante qu'à l'extrémité inférieure ou plus généralement à la fin de la zone 11 d'homogénéisation. La réunion de ces trois courants à lieu à l'entrée de la zone d'accélération 12. Les trois courants qui se réunissent ayant la même vitesse, aucun cisaillement ne se produit, l'homogénéité et l'uniformité obtenues à la fin de la zone d'homogénéisation sont conservées.

Ensuite, dans les deux buses 1 et 2, tout au long de la zone d'accélération 12, la poudre est accélérée du fait de la convergence des parois 19, jusqu'à l'extrémité de la buse où la poudre est libérée au travers de la fente de distribution 7.

Ainsi toutes les entrées de gaz dans l'ouverture 6 sont strictement controlées en débit et pression, les buses 1 et 2 n'étant pas ouvertes à l'atmosphère, mais au contraire étant étanches.

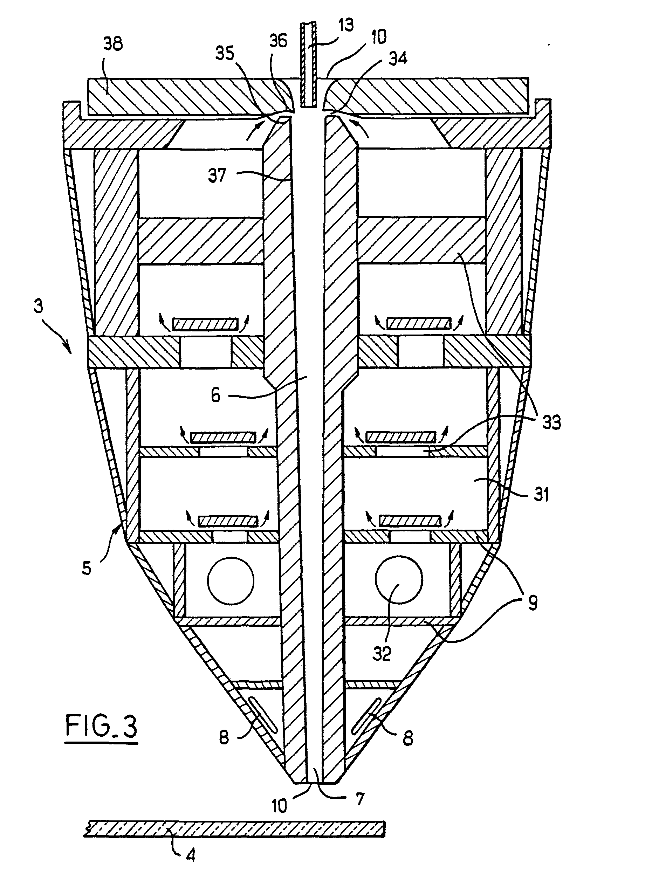

La figure 3 montre en variante de réalisation une buse 3 dans laquelle la zone d'homogénéisation et la zone d'accélération sont confondues et dans laquelle l'entrée des conduits 13 d'alimentation en poudre en suspension dans un gaz primaire, en général l'air, n'est plus réalisée de manière étanche.

En effet, cette buse est alimentée à son entrée, et dans la configuration représentée à sa partie supérieure, par tout moyen capable d'introduire de la poudre dans l'ouverture 6 sur toute sa longueur. Il peut s'agir comme précédemment de conduits 13 d'alimentation, disposés sur toute la longueur de la buse et délivrant une pluralité de jets, mais à l'inverse des cas précédents, ces conduits aboutissent seulement à l'entrée de l'ouverture 6 sans passage au travers de moyens d'étanchéité. Ces conduits 13 peuvent être fixes ou en mouvement ainsi par exemple animés d'un mouvement alternatif dans la direction de la longueur de la buse, de faible amplitude, par exemple une amplitude de l'ordre de l'espacement moyen entre deux conduits 13.

La poudre tombe dans l'ouverture 6 qui est régulièrement convergente depuis l'entrée, notamment le haut, de la buse jusqu'à la fente de distribution 7. La largeur de l'ouverture 6 au niveau de la fente 7 est environ 3 à 4 fois inférieure à sa largeur à l'entrée de la buse. Par exemple la largeur de l'ouverture 6 à l'entrée, ou en haut, de la buse sera environ de 15 mm, au niveau de la fente de distribution elle sera de 4 mm, et les parois planes qui délimitent l'ouverture 6 forment un angle de l'ordre de 5° avec le plan médian.

Les deux moitiés de corps de buse situées de chaque côté de l'ouverture 6 sont creuses et forment chacune une série de cavités de gaz, et en général d'air, sous pression telles que 31, chaque série étant reliée par une rampe 32 à une source de gaz, d'air en général, et chaque cavité étant séparée de la cavité voisine de la même série par une cloison formant entretoise telle que 9 avec des passages tels que 33 soit en matériau poreux du type "Poral" soit par des fentes de détente, permettant ainsi de disposer à la sortie de la dernière cavité 31 de la série, d'un débit constant sur toute la longueur de la buse.

Le gaz comprimé de chaque série de cavités 31 est injecté dans l'ouverture 6, à l'entrée, par une fente longitudinale de soufflage 34 calibrée, à lèvres 35 et 36 formées de façon à orienter le jet de gaz injecté tangentiellement à la paroi de l'ouverture 6 et plus précisément suivant un angle par rapport à cette paroi qui reste inférieur à 7° pour que ledit jet reste attaché à la paroi.

La lèvre inférieure 35 de chaque fente de soufflage 34 est constituée par le bord supérieur approximativement arrondi de la paroi latérale 37 de l'ouverture 6, tandis que la lèvre supérieure 36 est constituée par le bord inférieur arrondi de la partie extrême d'une plaque 38 formant le couvercle des cavités telles que 31. Ce bord a une forme complémentaire de la forme de la lèvre 35, et se prolonge légèrement vers le bas de façon à orienter le jet de gaz sous pression tangentiellement à la paroi.

Le calibrage de la fente 34 s'obtient par glissement de la plaque 38 dans une direction perpendiculaire aux parois de l'ouverture 6. Le gaz est injecté au travers des fentes de soufflage 34 à une vitesse bien supérieure à la vitesse de la poudre à la sortie des conduits 13 ou de tout moyen d'alimentation équivalent. Avantageusement, cette vitesse est sonique, pour augmenter l'accélération du mélange et favoriser la répartition uniforme du débit de gaz injecté sur toute la longueur de la buse.

L'extrémité des conduits 13 affleure les fentes 34 de soufflage. Le gaz injecté par les fentes 34 entraine de l'atmosphère extérieure dans l'ouverture 6, entre les conduits 13. Ce gaz injecté et cette atmosphère entraînée, suppriment tout risque de dépôt indésiré de poudre sur les parois de l'ouverture 6, et suppriment également tout risque de refoulement de poudre par l'entrée de la buse. Du fait que l'ouverture 6 est à l'atmosphère, la modification du mode d'alimentation en poudre n'implique aucune intervention sur la buse elle-même. Notamment on pourra modifier l'espacement des conduits 13, ou choisir un autre moyen d'alimentation, par exemple dans le cas où la buse 3 est placée au dessus du substrat 4 à revêtir, comme montré sur la fig. 3, un tambour à axe horizontal muni de picots tournant au-dessus de l'ouverture 6, chargé en poudre qu'il distribue sous l'effet d'un brossage longitudinal alternatif.

Avantageusement, dans les différentes variantes de buses 1, 2 et 3 présentées, l'extrémité de sortie, notamment basse du corps de buse, a un profil aérodynamique de forme effilée de manière à favoriser l'entrainement de l'atmosphère ambiante autour du rideau de poudre délivré par la fente de distribution 7, évitant ainsi la formation de turbulences néfastes à la régularité du débit. Cet entrainement d'air ambiant aide à l'obtention d'un dépôt uniforme sur le support.

En outre cette extrémité du corps de buse est munie de moyens de protection contre la chaleur.

Dans toutes les buses décrites nous avons indiqués que l'on homogénéisait et/ou accélérait la poudre en injectant en particulier de l'air dans l'ouverture 6; bien entendu, on peut injecter tout autre gaz si on le désire, par exemple de l'azote.

Dans le cas de la buse 3, on a indiqué qu'il s'agissait d'une buse atmosphérique dans laquelle l'extrémité d'entrée ou supérieure de l'ouverture 6 était en communication directe avec l'atmosphère. Bien entendu si l'on désire travailler sous atmosphère contrôlée, ou atmosphère gazeuse particulière, la partie supérieure de cette buse sera surmontée d'une chambre de contrôle d'atmosphère remplie du gaz désiré.

Dans toute la description qui précède, les buses 1, 2 et 3 ont été décrites comme étant disposées verticalement au-dessus du substrat à revêtir et les termes haut, bas, vertical, horizontal..., employés se rapportaient à cette configuration particulière prise seulement à titre d'exemple.

En fait les buses 1, 2 ou 3 peuvent prendre diverses positions: elles peuvent être au dessus ou en dessous du substrat à revêtir, parfaitement verticales ou inclinées par rapport à la verticale, couchées horizontalement ou approximativement horizontalement si par exemple le substrat est vertical; les expressions haut, bas, vertical, horizontal..., sont alors à adapter en fonction de la position de la buse.

Dans tous les cas de figures, les conduits d'alimentation 13 pourront provenir de la division d'un ou de plusieurs conduits élémentaires équivalents, issus d'une réserve en poudre en suspension dans un gaz, ou constitués par un éjecteur recevant la poudre d'une vis sans fin située à la base d'une trémie remplie de poudre, la diluant et lui donnant de la vitesse grâce à une addition d'air sous pression.

Les dispositifs précédemment décrits permettent de distribuer des poudres de différentes natures (composés organiques métalliques, matières plastiques, peintures, vernis, émaux, encres, pigments, etc...) de façon régulière sur les substrats désirés tels que verre, métal, bois, papier, etc...

En vue de la fabrication de verre revêtu de couches à qualités optiques particulières, on peut distribuer diverses poudres à base de différents métaux (étain, indium, titane, chrome, fer, cobalt,...) ainsi à titre d'exemple non limitatif, des poudres d'oxyde de dibutyl étain, de difluorure de dibutyl étain, d'acétyl acétonates métalliques, etc...

L'efficacité de ces dispositifs est telle qu'on peut les utiliser pour revêtir des substrats défilant à des vitesses élevées jusqu' à 10 ou 20 m/mn. L'efficacité est bien supérieure à celle que l'on peut obtenir avec les techniques de pulvérisation de solutions ou de C.V.D. (chemical vapor deposition). Bien entendu ces performances peuvent encore être améliorées en associant plusieurs buses en vue du revétement d'un même substrat.

En utilisant de telles buses, on constate en outre, une consommation de produit actif qui peut être bien inférieure à celle nécessitée par les autres techniques; on relève ainsi des poids de poudre consomme par $m^2$ de substrat revêtu, inférieurs à 10 g et généralement de l'ordre de 3 à 8 grammes pour des couches de l'ordre de 1500 à 2000 Angströms.

Ce procédé et ces dispositifs permettent d'obtenir des couches d'épaisseur réduite, des couches très régulières dont les variations d'épaisseur peuvent être inférieures à 50 Angströms et même aussi faibles que 30 ou 40 Angströms, n'introduisant ainsi que des variations de transmission lumineuse de l'ordre de 1 % lorsqu'on fabrique des couches "transparentes". Cette bonne régularité peut être obtenue sur des couches d'épaisseur inférieure au dizième de micron, et même de l'ordre de 400 à 800 Angströms. Bien entendu à fortiori la réalisation de couches aussi régulières mais plus épaisses est également possible. Ceci autorise la fabrication de couches anti-statiques. Ceci permet également le dépôt de sous-couches, par exemple de $TiO_2$, favorisant l'adhérence de revêtements ultérieurs déposés par la méme technique et éventuellement d'autres techniques, techniques sous vide notamment, ces sous-couches devant être de faible épaisseur, de l'ordre de 400 à 500 Angströms, pour altérer le moins possible la transmission lumineuse, et parfaitement continues malgré la très faible épaisseur.

Ceci autorise également la fabrication industrielle de couches de revêtement interférentielles, c'est-à-dire ayant une couleur choisie, sans variation de couleurs due à des variations d'épaisseurs. Grâce à cette technique, on peut méme fabriquer des verres revêtus d'une couche d'un bleu uniforme d'ordre II, de longueur d'onde dominante, en transmission de 575 nanomètres et en réflexion de 480 nanomètres lorsqu'elle est éclairée par l'illuminant étalon C tel que défini par la C.I.E (commission internationale de l'éclairage). Cette couche bleue étant celle pour laquelle les écarts d'épaisseur non créateurs d'interférences et également les écarts chromatiques perceptibles sont les plus faible, à fortiori, la fabrication de couches d'une autre couleur ou de teinte neutre pour lesquelles les contraintes sont moins sévères, est également possible.

Des vitrages revêtus de telles couches peuvent être utilisés en tant que vitrages pour automobile (1es réductions de transmission lumineuse dues ausdites couches sont faibles, si bien que des vitrages revêtus satisfont l'exigence de transmission d'au moins 75 % requise par les réglementations), vitrages pour l'habitat, notamment vitrages anti-chaleur, parois protectrices réfléchissant le, rayonnement calorifique du type hublots de cuisinières, parois de réservoirs isolants. Des substrats autres que le verre peuvent bien entendu étre également revêtus par exemples tuyau, plaques métalliques. Du verre autrement que sous forme de vitrage, par exemple fibres de verre peut étre revêtu.

Des exemples de conditions de mise en oeuvre des dispositifs de l'invention, et des exemples de produits ainsi obtenus sont donnés ci-après.

### Exemple 1

Substrat:
verre float, d'épaisseur 4 mm, vitesse de défilement 12,50 m/mn.

Poudre:
DBTF de granulométrie inférieure à 20 microns, débit: 5,6 kg par heure et par mètre linéaire de longueur de buse.

Buse:
buse employée identique à la buse montrée fig. 3, largeur de la fente de distribution référencée 7: 4,5mm, distance entre l'extrémité basse de la buse et le verre: 90 mm, gaz primaire dans lequel la poudre est en suspension à son arrivée par les conduits 13: azote à raison de 135 $Nm^3$ par heure et par mètre linéaire de longueur de buse, gaz injecté par les fentes 37: azote à raison de 335 $Nm^3$ par heure et par mètre linéaire de longueur de buse, Air atmosphérique aspiré: 125 $Nm^3$ par heure et par mètre linéaire de longeur de buse.

Couche obtenue:
Monocouche de $SnO_2$ dopée au fluor, d'épaisseur comprise entre 1635 et 1650 Angströms, soit avec des écarts d'épaisseur de 15 Angströms, coefficient d'émissivité de la couche à 393°K: 0,3, transmission lumineuse: 83 % ± 1 %, couleur: bleutée en réflexion, légèrement ambrée en transmission.

### Exemple 2

Substrat:
verre de 6 mm d'épaisseur, vitesse de défilement 6 m/mn.

Poudre:
mélange de Acétyl acétonate de Fe 25 %,
Acétyl acétonate de Cr 25 %,
Acétyl acétonate de Coll 50 %,
débit: 1,200 kg par heure et par mètre linéaire de buse.

Buse:
identique à celle montrée fig. 1, distance verre-buse: 90 mm, gaz primaire: air à 200 $Nm^3$ par heure et par mètre de longueur de buse, gaz d'homogénéisation: air à 60 $Nm^3$ par heure et par mètre de buse, gaz d'accélération: air à 250 $Nm^3$ par heure et par mètre de buse.

Couche obtenue:
transmission lumineuse 44 % ± 1%
réflexion lumineuse 34 % ± 1 %.

### Exemple 3

Substrat: verre float de 4 mm d'épaisseur.
Poudre: DBTF.
Buse: identique à celle montrée fig. 3.
Couche obtenue:
mono couche de $SnO_2$ dopée au fluor, épaisseur: 2400 à 2450 Angströms, couleur: jaune doré en réflexion, légèrement bleutée en transmission. coefficient d'émissivité: 0,25 à 393°K, transmission lumineuse: 76 % ± 1%.

## Revendications

1. Procédé pour distribuer de façon régulière une poudre sur un substrat dans lequel on introduit la poudre en suspension dans un gaz porteur à l'intérieur d'une buse et dans lequel on forme une lame de ladite poudre en suspension dans un gaz à proximité et sensiblement à l'aplomb du substrat caractérisé en ce qu'on forme ladite lame de poudre en suspension dans un gaz dès son introduction dans la buse, en ce qu'on maintient ladite lame en écoulement continu en direction du substrat sur toute sa longueur, en ce qu'on introduit des courants gazeux dans cette lame pour y créer des turbulences et homogénéiser le mélange de gaz et de poudre au fur et à mesure qu'il progresse vers le substrat, en ce qu'on accélère régulièrement le mouvement de la poudre vers le substrat en l'entrainant par des courants gazeux additionnels introduits sur ses flancs en direction du substrat.

2. Procédé selon la revendication 1, caractérisé en ce que immédiatement avant le contact de la poudre avec le substrat on favorise l'entrainement par induction de l'atmosphère ambiante, par le courant de poudre en suspension dans le gaz, libéré à grande vitesse.

3. Procédé selon l'une des revendications 1 ou 2, caractérisé en ce qu'on rétrécit l'épaisseur de la lame de poudre en suspension au fur et à mesure qu'on se rapproche du substrat de façon à accélérer la poudre.

4. Procédé selon l'une des revendications précédentes, caractérisé en ce que la vitesse de la poudre dans toute la zone où elle est accélérée est supérieure à 10 m/s.

5. Procédé selon l'une des revendications précédentes, caractérisé en ce qu'on donne à la lame une largeur de l'ordre du 1/50e au 1/100e de sa hauteur.

6. Procédé selon l'une des revendications précédentes, caractérisé en ce que les courants gazeux additionnels sont des courants lamellaires uniformes sur toute la longueur de la lame, introduits de part et d'autre de ladite lame, de façon à l'envelopper.

7. Procédé selon l'une des revendications précédentes, caractérisé en ce que les courants additionnels sont pariétaux.

8. Procédé selon l'une quelconque des revendications précédentes, caractérisé en ce que dans une première étape on crée des turbulences pour homogénéiser le mélange de gaz et de poudre et en ce que dans une seconde étape séparée de la première on accélère le mouvement de la poudre.

9. Procédé selon la revendication 8, caractérisé en ce que les courants additionnels pour accélérer la poudre sont introduits à la même vitesse que la poudre en suspension à l'endroit de la rencontre.

10. Procédé selon la revendication 8, caractérisé en ce que les courants additionnels sont introduits à une vitesse supérieure à celle de la poudre au moment de la rencontre.

11. Procédé selon l'une des revendications 8 à 10, caractérisé en ce qu'on homogénéise le mélange de gaz et de poudre dans la lame en modulant la largeur de ladite lame avant de l'accélérer: convergence ou convergence suivie de divergence.

12. Procédé selon l'une des revendications 8 à 11, caractérisé en ce que tous les gaz entrant dans la lame sont injectés sous pression et débit contrôlés.

13. Procédé selon l'une des revendications 1, à 7, caractérisé en ce qu'on accélère et homogénéise le mélange de poudre et de gaz au cours d'une seule et même étape, les courants de gaz supplémentaire étant introduits à une vitesse supérieure à celle de la poudre au moment où elle rencontre lesdits courants.

14. Procédé selon la revendication 13, caractérisé en ce que les courants supplémentaires introduits à grande vitesse réalisent une aspiration de l'atmosphère environnante.

15. Utilisation du procédé selon l'une des revendications précédentes pour déposer d'une poudre ayant une granulométrie de l'ordre de 20 microns, et de préférence comprise entre 5 et 40 microns, de composés organo métalliques du type DBTO ou DBTF ou acétyl acétonates métalliques en vue de sa pyrolyse sur un ruban de verre porté à haute température.

16. Utilisation selon la revendication 15, caractérisée en ce que l'extrémité de sortie de la buse est disposée à une distance du substrat à revêtir comprise entre 15 et 120 mm et de préférence voisine de 30 mm.

17. Utilisation selon l'une des revendications 15 ou 16, caractérisée en ce que la poudre à la sortie de la buse est projetée en direction du substrat avec une vitesse supérieure à 10 m/s et de préférence comprise entre 25 et 45 m/s.

18. Buse de projection de poudre sur un support (4), comportant une ouverture (6) qui la traverse de part en part et qui est terminée par une fente (7) de distribution longitudinale, caractérisée en ce que ladite ouverture a au moins une zone dite zone d'accélération (12) précédant immédiatement la fente de distribution (7), constamment convergente formée par deux parois (20, 37) en regard l'une de l'autre, faiblement espacées délimitant un espace en forme de lame, dans l'entrée duquel débouche au moins un conduit d'alimentation en poudre, dans l'entrée duquel débouche également sur ses flancs, le long de ses parois latérales (20, 37), des fentes (48, 34) d'amenée d'un gaz dit d'accélération, dirigées vers l'autre extrémité de la buse.

19. Buse selon la revendication 18, caractérisée en ce que la convergence de la zone d'accélération est telle que la largeur de ladite zone au niveau de la fente de distribution est environ 3 à 4 fois plus faible qu'au niveau où elle reçoit la poudre et où elle est alimentée en gaz d'accélération.

20. Buse selon la revendication 19, caractérisée en ce que la fente de distribution a au plus 5 mm de largeur.

21. Buse selon l'une des revendications 18 à 20, caractérisée en ce que les fentes d'amenée du gaz d'accélération sont dirigées vers le substrat.

22. Buse selon l'une des revendications 18 à 21, caractérisée en ce que l'ouverture la traversant comporte également une zone d'homogénéisation qui précède la zone d'accélération et qui lui fournit la poudre, la zone d'homogénéisation étant elle même alimentée en poudre par une pluralité de conduits d'alimentation répartis dans la direction longitudinale de la buse, débouchant de manière étanche au début de ladite zone, des moyens de soufflage d'un gaz d'homogénéisation destiné à créer des turbulences débouchant également au même niveau.

23. Buse selon la revendication 22, caractérisée en ce que les moyens de soufflage du gaz d'homogénéisation comprennent des cavités alimentées en gaz sous pression communiquant avec la zone d'homogénéisation par l'intermédiaire de plaques poreuses.

24. Buse selon la revendication 23, caractérisée en ce que la zone d'homogénéisation est une zone étroite faisant toute la longueur de la buse, limitée par deux parois qui se font face, sensiblement parallèles, délimitant ainsi un espace en forme de lame.

25. Buse selon l'une des revendications 22 à 24, caractérisée en ce que les parois limitant la zone d'accélération forment un angle de l'ordre de 7 ou 8° avec le plan médian.

26. Buse selon l'une des revendications 22 à 25, caractérisée en ce que les arrivées des conduits d'amenée de poudre sont cloisonnés par les lamelles disposées transversalement et ayant la forme de prismes dont la pointe est tournée vers le substrat, de façon à conserver la section au passage des conduits d'amenée de poudre à l'ouverture traversant la buse.

27. Buse selon l'une des revendications 22 à 26, caractérisée en ce que les sections des fentes d'amenée du gaz d'accélération sont telles que le gaz d'accélération et la poudre en suspension se rencontrent en étant à la même vitesse.

28. Buse selon l'une des revendications 22 à 26, caractérisée en ce que le gaz d'accélération est amené par des fentes conformées de façon que les courants de ce gaz d'accélération soit pariétaux, ces fentes étant alimentées de façon que les courants aient une grande vitesse supérieure à celle de la poudre.

29. Buse selon l'une des revendications 18 à 21, caractérisée en ce que des conduits d'alimentation en poudre répartis dans la direction longitudinale débouchent directement au début de la zone d'accélération.

30. Buse selon la revendication 29, caractérisée en ce que les conduits sont animés d'un mouvement alternatif dans la direction de sa longueur.

31. Buse selon l'une des revendications 18 à 21, caractérisée en ce qu'elle est alimentée en poudre directement au début de la zone d'accélération par un distributeur comprenant un tambour à picots tournant autour d'un axe horizontal, chargé en poudre, extraite par une brosse au mouvement horizontal alternatif.

32. Buse selon l'une des revendications 29 à 31, caractérisée en ce que le gaz d'accélération est introduit à travers des fentes calibrées conformées de telle façon que l'angle d'introduction du gaz fasse un angle avec la paroi de la zone d'accélération, qui ne dépasse pas 7°.

33. Buse selon l'une des revendications 18 à 21, 29 à 32, caractérisée en ce que le gaz d'accélération est fourni par une pluralité de cavités en série, la première étant alimentée en gaz sous pression et communiquant avec les suivantes par des plaques poreuses ou des fentes de détente, la dernière des cavités de la série fournissant le gaz à la zone d'accélération à travers une fente étroite calibrée.

34. Buse selon la revendication 33, caractérisée en ce que le gaz est fourni à vitesse sonique.

35. Buse selon l'une des revendications 29 à 34, caractérisée en ce que l'entrée de la zone d'accélération est à l'atmosphère libre.

36. Buse selon l'une des revendications 29 à 34, caractérisée en ce que l'entrée de la zone d'accélération est surmontée par une chambre de contrôle d'atmosphère alimentée en atmosphère contrôlée.

37. Buse selon l'une des revendications 29 à 36, caractérisée en ce que les parois de l'ouverture forment un angle de l'ordre de 5° avec plan médian.

38. Buse selon l'une des revendications 18 à 37, caractérisée en ce que le nez de buse est effilé.

39. Buse selon l'une des revendications 18 à 38, caractérisée en ce que le nez de buse possède une protection thermique et des moyens de refroidissement.

40. Buse selon l'une des revendications 18 à 39, caractérisée en ce que la largeur de l'ouverture est de l'ordre du 1/50e au 1/100e de sa hauteur.

41. Produit formé d'un substrat recouvert d'un revêtement obtenu par dépôt d'une poudre selon le procédé de l'une des revendications 1 à 14, caractérisé en ce que les variations d'épaisseur du revêtement sont inférieures à 50 Angströms et même de l'ordre de 30 à 40 Angströms.

42. Produit selon la revendication 41, caractérisé en ce que le substrat étant une feuille de verre, la régularité du revêtement est telle que les variations de transmission lumineuse sont de l'ordre du un pour cent.

43. Produit selon l'une des revendications 41 ou 42, caractérisé en ce que le revêtement est une couche de $SnO_2$ dopée au fluor, dont la longueur d'onde dominante sous éclairement par la source C est en réflexion 480 nm et en transmission 575 nm, de couleur uniforme.

44. Produit selon l'une des revendications 41 ou 42, caractérisé en ce qu'il possède un revêtement d'épaisseur inférieure à 0,1 micron, et même de l'ordre de 400 à 800 Angströms.

45. Produit selon la revendication 44, caractérisé en ce que le revêtement est une couche continue de $TiO_2$ d'épaisseur de l'ordre de 500 Angströms.

46. Produit selon l'une des revendications 41 ou 42, caractérisé en ce que le substrat étant une feuille de verre, notamment de 4 mm d'épaisseur, la couche déposée étant de l'oxyde d'étain dopé au fluor, l'émissivité est au maximum de l'ordre de 0,3 et la transmission lumineuse est supérieure à 75 %, rendant possible l'emploi comme pare-brise pour automobile et en général comme vitrage pour automobile.

47. Utilisation du produit selon l'une des revendications 41 à 46, en tant que paroi anti-chaleur ou réfléchissant la chaleur, notamment pour hublot de cuisinière ou appareils du même type, ou pour réservoir isolant.

**Patentansprüche**

1. Verfahren zum gleichmäßigen Verteilen eines Pulvers auf einem Substrat, bei welchem das Pulver in Suspension in einem Trägergas in das Innere einer Düse eingeführt und ein dünnes Blättchen aus Pulver in Suspension in einem Gas in der Nähe und im wesentlichen senkrecht zum Substrat ausgebildet wird, dadurch gekennzeichnet, daß das Blättchen aus in Suspension in einem Gas befindlichem Pulver von seinem Eintritt in die Düse an ausgebildet wird, das Blättchen in kontinuierlicher Strömung in Richtung auf das Substrat über seine gesamte Länge gehalten wird, Gasströme in dieses Blättchen eingeführt werden, um Turbulenzen zu erzeugen und das Gemisch aus Gas und Pulver zu homogenisieren in dem Maße wie das Blättchen zum Substrat gelangt, und daß die Bewegung des Pulvers zum Substrat gleichmäßig beschleunigt wird, indem das Pulver durch zusätzliche auf seine Flanken in Richtung auf das Substrat zugeführte Gasströme mitgerissen wird.

2. Verfahren nach Anspruch 1, dadurch gekennzeichnet, daß unmittelbar vor Kontakt des Pulvers mit dem Substrat die Mitnahme durch Induktion von Umgebungsluft durch den auf hohe Geschwindigkeit gebrachten Strom aus in Suspension in einem Gas befindlichen Pulver begünstigt wird.

3. Verfahren nach einem der Ansprüche 1 oder 2, dadurch gekennzeichnet, daß die Dicke des Blättchens aus in Suspension befindlichem Pulver mit Annäherung an das Substrat zwecks Beschleunigung des Pulvers reduziert wird.

4. Verfahren nach einem der vorhergehenden Ansprüche, dadurch gekennzeichnet, daß die Geschwindigkeit des Pulvers in der Zone, wo das Pulver beschleunigt wird, größer als 10 m/s ist.

5. Verfahren nach einem der vorhergehenden Ansprüche, dadurch gekennzeichnet, daß die Breite des Blättchens auf 1/50 bis 1/100 seiner Höhe eingestellt wird.

6. Verfahren nach einem der vorhergehenden Ansprüche, dadurch gekennzeichnet, daß die zusätzlichen Gasströme gleichmäßige laminare Strömungen über die gesamte Länge des Blättchens sind, welche beidseits des Blättchens zum Zwecke dessen Umhüllung eingeführt werden.

7. Verfahren nach einem der vorhergehenden Ansprüche, dadurch gekennzeichnet, daß die zusätzlichen Ströme über dem Umfang vorgesehen sind.

8. Verfahren nach einem der vorhergehenden Ansprüche, dadurch gekennzeichnet, daß in einer ersten Stufte Turbulenzen zur Homogenisierung des Gemisches aus Gas und Pulver erzeugt und in einer zweiten, von der ersten Stufe getrennten Stufe das Pulvers beschleunigt wird.

9. Verfahren nach Anspruch 8, dadurch gekennzeichnet, daß die zusätzlichen Ströme zur Beschleunigung des Pulvers mit derselben Geschwindigkeit wie das in Suspension befindliche Pulver zur Auftreffstelle geführt werden.

10. Verfahren nach Anspruch 8, dadurch gekennzeichnet, daß die zusätzlichen Ströme mit einer Geschwindigkeit größer als die des Pulvers zum Zeitpunkt des Auftreffens eingeführt werden.

11. Verfahren nach einem der Ansprüche 8 bis 10, dadurch gekennzeichnet, daß das Gemisch aus Gas und Pulver in dem Blättchen dadurch homogenisiert wird, indem die Breite des Blättchens vor dessen Beschleunigung moduliert wird: Konvergenz oder Konvergenz gefolgt von einer Divergenz.

12. Verfahren nach einem der Ansprüche 8 bis 11, dadurch gekennzeichnet, daß alle in das Blättchen eintretenden Gase mit geregeltem Druck und geregelter Menge injiziert werden.

13. Verfahren nach einem der Ansprüche 1 bis 7, dadurch gekennzeichnet, daß das Gemisch aus Pulver und Gas im Laufe ein und derselben Stufe beschleunigt und homogenisiert wird, wobei die zusätzlichen Gasströme mit einer Geschwindigkeit größer als die des Pulvers zum Zeitpunkt des Zusammentreffens des Pulvers mit den Strömen eingeführt werden.

14. Verfahren nach Anspruch 13, dadurch gekennzeichnet, daß die mit großer Geschwindigkeit eingeführten zusätzlichen Ströme eine Ansaugung von Umgebungsluft bewirken.

15. Verwendung des Verfahrens nach einem der vorhergehenden Ansprüche zur pyrolytischen Ablagerung eines Pulvers auf einem hohe Temperatur aufweisenden Glasband, welches eine Granulometrie in der Größe von 20 Mikrometer und zwar vorzugsweise zwischen 5 und 40 Mikrometer aufweist und aus metallorganischen Verbindungen der Art von DBTO oder DBTF oder metallischen Acetylacetonaten gebildet ist.

16. Verwendung nach Anspruch 15, dadurch gekennzeichnet, daß das Austrittsende der Düse in einem Abstand zwischen 50 und 120 mm und vorzugsweise im Bereich von 30 mm vom zu beschichtenden Substrat angeordnet ist.

17. Verwendung nach einem der Ansprüche 15 oder 16, dadurch gekennzeichnet, daß das Pulver am Düsenaustritt in Richtung auf das Substrat mit einer Geschwindigkeit größer als 10 m/s und vorzugsweise zwischen 25 und 45 m/s aufgespritzt wird.

18. Düse zum Aufbringen von Pulver auf eine Unterlage (4) mit einer die Düse durchdringenden Öffnung (6), welche in einen längsverlaufenden Verteilerschlitz (7) mündet, dadurch gekennzeichnet, daß die Öffnung mindestens eine Beschleunigungszone (12) unmittelbar vor dem Verteilerschlitz (7) aufweist, welche aus zwei zueinander stetig konvergierenden Wänden (20, 37) gebildet ist, die mit geringem Abstand angeordnet sind und einen Zwischenraum in Form eines Blättchens begrenzen, in dessen Einlaß mindestens eine Speiseleitung für das Pulver und ferner an den Flanken über die Länge der Seitenwände (2o, 37) Schlitze (48, 34) für die Zufuhr eines zur Beschleunigung dienenden Gases einmünden, welche in Richtung auf das andere Ende der Düse gerichtet sind.

19. Düse nach Anspruch 18, dadurch gekennzeichnet, daß die Beschleunigungszone derart konvergiert, daß die Breite der Zone in Höhe des Verteilerschlitzes etwa drei- bis viermal kleiner als am Niveau der Aufnahme des Pulvers und der Versorgung mit Beschleunigungsgas ist.

20. Düse nach Anspruch 19, dadurch gekennzeichnet, daß der Verteilerschlitz eine Breite von höchstens 5 mm aufweist.

21. Düse nach einem der Ansprüche 18 bis 20, dadurch gekennzeichnet, daß die Zuführschlitze für das zur Beschleunigung dienende Gas in Richtung auf das Substrat gerichtet sind.

22. Düse nach einem der Ansprüche 18 bis 21, dadurch gekennzeichnet, daß die Durchgangsöffnung ferner eine Homogenisierungszone aufweist, die der Beschleunigungszone vorgeschaltet ist und dieser das Pulver zuführt, wobei die Homogenisierungszone selbst mit Pulver über eine Anzahl von Speiseleitungen versorgt wird, welche in Längsrichtung der Düse verteilt angeordnet sind und dicht zu Beginn der Zone einmünden und daß ferner auf demselben Niveau Einrichtungen zum Einblasen eines Homogenisierungsgases zwecks Erzeugung von Turbulenzen einmünden.

23. Düse nach Anspruch 22, dadurch gekennzeichnet, daß die Einrichtungen zum Einblasen von Homogenisierungsgas mit unter Druck stehendem Gas gespeiste Hohlräume aufweisen, die mit der Homogenisierungszone unter Zwischenschaltung von porösen Platten in Verbindung sind.

24. Düse nach Anspruch 23, dadurch gekennzeichnet, daß die Homogenisierungszone durch eine schmale Zone gebildet ist, die sich über die gesamte Länge der Düse erstreckt und durch zwei gegenüberliegende Wände begrenzt ist, die im wesentlichen parallel verlaufen und zwischen sich einen blättchenförmigen Zwischenraum begrenzen.

25. Düse nach einem der Ansprüche 22 bis 24, dadurch gekennzeichnet, daß die die Beschleunigungszone begrenzenden Wände einen Winkel in der Größe von 7 oder 8 Grad zur Mittelebene bilden.

26. Düse nach einem der Ansprüche 22 bis 25, dadurch gekennzeichnet, daß die Eintritte der Zuführleitungen für Pulver durch Lamellen abgeteilt sind, welche quer angeordnet sind und die Form von Prismen aufweisen, deren Spitze auf das Substrat gerichtet ist, um den Durchgangsquerschnitt der Zuführleitungen für Pulver zu der Düsendurchgangsöffnung zu halten.

27. Düse nach einem der Ansprüche 22 bis 26, dadurch gekennzeichnet, daß die Querschnitte der Zuführschlitze für das Beschleunigungsgas derart ausgebildet sind, daß das Beschleunigungsgas und das sich in Suspension befindliche Pulver sich mit derselben Geschwindigkeit treffen.

28. Düse nach einem der Ansprüche 22 bis 26, dadurch gekennzeichnet, daß das Beschleunigungsgas über derart ausgebildete Schlitze zugeführt wird, daß die Ströme des Beschleunigungsgases über den Umfang verlaufen, und daß die Schlitze derart gespeist werden, daß die Ströme eine Geschwindigkeit größer als die des Pulvers aufweisen.

29. Düse nach einem der Ansprüche 18 bis 21, dadurch gekennzeichnet, daß die in Längsrichtung verteilten Zuführleitungen für Pulver unmittelbar am Beginn der Beschleunigungszone einmünden.

30. Düse nach Anspruch 29, dadurch gekennzeichnet, daß die Leitungen in Richtung der Länge der Düse hin- und herbewegend angetrieben sind.

31. Düse nach einem der Ansprüche 18 bis 21, dadurch gekennzeichnet, daß die Düse mit Pulver unmittelbar zu Beginn der Beschleunigungszone durch einen Verteiler gespeist wird, welcher eine Trommel mit Spitzen aufweist, die sich um eine horizontale Achse dreht und mit Pulver beladen ist, welches durch eine Bürste mit einer hin- und herbewegenden Horizontalbewegung ausgegeben wird.

32. Düse nach einem der Ansprüche 29 bis 31, dadurch gekennzeichnet, daß das Gas zur Beschleunigung durch kalibrierte Schlitze eingeführt wird, die derart ausgebildet sind, daß der Einführwinkel des Gases einen Winkel mit der Wand der Beschleunigungszone bildet, der 7 Grad nicht übersteigt.

33. Düse nach einem der Ansprüche 18 bis 21, 29 bis 32, dadurch gekennzeichnet, daß das Beschleunigungsgas durch eine Anzahl von in Reihe befindlichen Hohlräumen zugeführt wird, von denen der erste mit unter Druck stehendem Gas gespeist wird und mit den folgenden durch poröse Platten oder Entspannungsschlitze in Verbindung steht und der letzte Hohlraum der Reihe das Gas der Beschleunigungszone durch einen schmalen kali-brierten Schlitz zuführt.

34. Düse nach Anspruch 33, dadurch gekennzeichnet, daß das Gas auf Schallgeschwindigkeit gebracht wird.

35. Düse nach einem der Ansprüche 29 bis 34, dadurch gekennzeichnet, daß der Eintritt der Beschleunigungszone sich in freier Atmosphäre befindet.

36. Düse nach einem der Ansprüche 29 bis 34, dadurch gekennzeichnet, daß der Einlaß der Beschleunigungszone überlagert ist von einer Kontrollzone, die mit kontrollierter Atmosphäre gespeist ist.

37. Düse nach einem der Ansprüche 29 bis 36, dadurch gekennzeichnet, daß die Wände der Öffnung ein Winkel in der Größe von 5 Grad mit der Mittelebene bilden.

38. Düse nach einem der Ansprüche 18 bis 37, dadurch gekennzeichnet, daß das Vorderteil der Düse verjüngt ausgebildet ist.

39. Düse nach einem der Ansprüche 18 bis 38, dadurch gekennzeichnet, daß das Vorderteil der Düse einen Wärmeschutz und Kühlmittel aufweist.

40. Düse nach einem der Ansprüche 18 bis 39, dadurch gekennzeichnet, daß die Breite der Öffnung 1/50 bis 1/100 der seiner Höhe beträgt.

41. Aus einem Substrat gebildetes Erzeugnis, welches mit einem Überzug durch Ablagerung eines Pulvers gemäß dem Verfahren nach einem der Ansprüche 1 bis 14 bedeckt ist, dadurch gekennzeichnet, daß die Schwankungen der Dicke des Überzugs geringer als 50 Angström, vorzugsweise in der Größenordnung von 30 bis 40 Angström liegen.

42. Erzeugnis nach Anspruch 41, dadurch gekennzeichnet, daß das Substrat durch eine Glasfolie gebildet ist, dessen Überzug derart gleichmäßig ist, daß die Schwankungen der Lichtdurchlässigkeit in der Größenordnung von 1 % liegen.

43. Erzeugnis nach einem der Ansprüche 41 oder 42, dadurch gekennzeichnet, daß der Überzug eine mit Fluor dotierte Schicht aus $SnO_2$ ist, deren hauptmaßgebende Wellenlänge unter Beleuchtung durch die Quelle C 480 nm bei Reflexion und 575 nm bei Transmission beträgt und die von gleichmäßiger Farbe ist.

44. Erzeugnis nach einem der Ansprüche 41 oder 42, dadurch gekennzeichnet, daß der Überzug eine Dicke geringer als 0,1 Mikrometer, insbesondere in der Größenordnung von 400 bis 800 Angström aufweist.

45. Erzeugnis nach Anspruch 44, dadurch gekennzeichnet, daß der Überzug eine durchgehende Schicht aus $TiO_2$ mit einer Dicke in der Größenordnung von 500 Angström ist.

46. Erzeugnis nach einem der Ansprüche 41 oder 42, dadurch gekennzeichnet, daß das Substrat aus einer Glasfolie mit insbesondere einer Dicke von 4 mm gebildet ist, die abgelagerte Schicht durch mit Fluor dotiertes Zinnoxid gebildet ist, die Emissivität maximal 0,3 und die Lichtdurchlässigkeit größer als 75 % beträgt, so daß das Erzeugnis als Windschutzscheibe für ein Kraftfahrzeug und im allgemeinen als Verglasung für ein Kraftfahrzeug verwendbar ist.

47. Verwendung des Erzeugnisses nach einem der Ansprüche 41 bis 46 als Hitze- oder Wärmereflexionsschild, insbesondere als Fenster für Küchenherde oder derartige Geräte oder Isolierbehälter.

**Claims**

1. Process for uniformly distributing a powder onto a substrate, in which the powder is introduced in suspension into a carrier gas inside a nozzle, and in which a strip of said suspended powder is formed in a gas in proximity to and substantially vertically above (or below) the substrate, characterized in that said strip of suspended powder is formed in a gas as soon as it is introduced into the nozzle, in that said strip is maintained in continuous flow towards the substrate throughout its length, in that gaseous currents are introduced into this strip to create turbulences there and to homogenize the mixture of gas and powder gradually as it progresses towards the substrate, and in that the movement of the powder towards the substrate is regularly accelerated by entraining it by additional gaseous flows introduced at its flanks and directed towards the substrate.

2. Process according to claim 1, characterized in that, immediately before contact of the powder with the substrate, entrainment is promoted by the induction of the ambient atmosphere by the flow of powder suspended in the gas, released at high speed.

3. Process according to one of claims 1 or 2, characterized in that the thickness of the strip of suspended powder is reduced gradually as the substrate is approached, in such a manner as to accelerate the powder.

4. Process according to one of the preceding claims, characterized in that the velocity of the powder in the entire zone in which it is accelerated is greater than 10 m/s.

5. Process according to one of the preceding claims, characterized in that a width of the order of 1/50 to 1/100 of its height is given to the strip.

6. Process according to one of the preceding claims, characterized in that the additional gaseous flows are uniform lamellar flows along the entire length of the strip, introduced on either side of said strip in such a manner as to envelop it.

7. Process according to one of the preceding claims, characterized in that the additional flows are parietal flows or wall flows.

8. Process according to any one of the preceding claims, characterized in that, in a first step, turbulences are created for homogenizing the mixture of gas and powder and in that, in a second step separated from the first, the movement of the powder is accelerated.

9. Process according to claim 8, characterized in that the additional flows for accelerating the powder are introduced at the same speed as the suspended powder at the place of meeting.

10. Process according to claim 8, characterized in that the additional flows are introduced at a speed greater than that of the powder at the instant of meeting.

11. Process according to one of claims 8 to 10, characterized in that the mixture of gas and powder is homogenized in the strip by modulating the width of said strip before accelerating it: convergence or convergence followed by divergence.

12. Process according to one of claims 8 to 11, characterized in that all the gases entering into the strip are injected under controlled pressure and flow rate.

13. Process according to one of claims 1 to 7, characterized in that the mixture of powder and gas is accelerated and homogenized during the course of one and the same step, the flows of supplementary gas being introduced at a speed greater than that of the powder at the instant at which it encounters said flows.

14. Process according to claim 13, characterized in that the supplementary flows introduced at high speed produce a suction in of the surrounding atmosphere.

15. Utilization of the process according to one of the preceding claims for depositing a powder having a granulometry of the order of 20 microns, and preferably of between 5 and 40 microns, of organo-metallic compounds of the type DBTO or DBTF or metallic acetyl acetonates for the purpose of its pyrolysis onto a band of glass raised to high temperature.

16. Utilization according to claim 15, characterized in that the outlet end of the nozzle is disposed at a distance from the substrate to be coated lying between 15 and 120 mm and preferably in the vicinity of 30 mm.

17. Utilization according to one of claims 15 or 16, characterized in that the powder, at the outlet from the nozzle, is projected towards the substrate at a speed exceeding 10 m/s and preferably lying between 25 and 45 m/s.

18. Nozzle for projecting powder onto a support (4), comprising a passage (6) which passes through the nozzle from end to end and which is terminated by a longitudinal distribution slit (7), characterized in that said passage has at least one zone termed acceleration zone (12), immediately preceding the distribution slit (7), the zone continuously converging and being formed by two walls (20, 37) facing each other and spaced slightly apart to define a space in the form of a strip, into the inlet of which there leads at least one powder feed duct, into the inlet of which there lead also, on its flanks and along its lateral walls (20, 37), slits (48, 34) for feeding a gas known as acceleration gas, the slits being directed towards the other end of the nozzle.

19. Nozzle according to claim 18, characterized in that the convergence of the acceleration zone is such that the width of said zone at the distribution slit is approximately 3 to 4 times less than at the level where it receives the powder and where it is supplied with acceleration gas.

20. Nozzle according to claim 19, characterized in that the distribution slit is at most 5 mm in width.

21. Nozzle according to one of claims 18 to 20, characterized in that the feed slits for the acceleration gas are directed towards the substrate.

22. Nozzle according to one of claims 18 to 21, characterized in that the passage passing through it comprises also a homogenization zone, which precedes the acceleration zone and supplies the powder to it, the homogenization zone being itself supplied with powder by a plurality of feed ducts distributed in the longitudinal direction of the nozzle and leading in sealed manner into the start of said zone, means for blowing a homogenization gas intended for creating turbulences also leading in at the same level.

23. Nozzle according to claim 22, characterized in that the blowing means for the homogenization gas comprise cavities supplied with pressurized gas communicating with the homogenization zone through the intermediary of porous plates.

24. Nozzle according to claim 23, characterized in that the homogenization zone is a narrow zone making up the whole length of the nozzle and bounded by two substantially parallel walls facing each other, thus defining a space having the form of a strip.

25. Nozzle according to one of claims 22 to 24, characterized in that the walls bounding the acceleration zone make an angle of the order of 7 or 8° with the median plane.

26. Nozzle according to one of claims 22 to 25, characterized in that the inlets from the powder feed ducts are partitioned by transversely disposed blades having the form of prisms, the apex of which is towards the substrate, in such a manner as to maintain the cross-section at the junction of the powder feed ducts with the passage passing through the nozzle.

27. Nozzle according to one of claims 22 to 26, characterized in that the cross-sections of the feed slits for the acceleration gas are such that the acceleration gas and the suspended powder meet each other while at the same speed.

28. Nozzle according to one of claims 22 to 26, characterized in that the acceleration gas is fed in through slits so shaped that the flows of this acceleration gas are parietal, these slits being supplied in such a manner that the flows have a high speed, higher than that of the powder.

29. Nozzle according to one of claims 18 to 21, characterized in that powder feed ducts distributed in the longitudinal direction lead directly into the start of the acceleration zone.

30. Nozzle according to claim 29, characterized in that the ducts are given an alternating movement in the direction of the length of the nozzle.

31. Nozzle according to one of claims 18 to 21, characterized in that it is supplied with powder directly at the start of the acceleration zone by a distributor comprising a drum having spikes revolving about a horizontal axis and charged with powder, the powder being extracted by a brush having an alternating horizontal movement.

32. Nozzle according to one of claims 29 to 31, characterized in that the acceleration gas is introduced through calibrated slits, shaped in such a manner that the angle of entry of the gas makes an angle with the wall of the acceleration zone which does not exceed 7°.

33. Nozzle according to one of claims 18 to 21, 29 to 32, characterized in that the acceleration gas is supplied through a plurality of cavities in series, the first being supplied with pressurized gas and communicating with the succeeding ones through porous plates or expansion slits, the last of the cavities of the series supplying the gas to the acceleration zone through a calibrated narrow slit.

34. Nozzle according to claim 33, characterized in that the gas is supplied at sonic speed.

35. Nozzle according to one of claims 29 to 34, characterized in that the inlet to the acceleration zone is open to the atmosphere.

36. Nozzle according to one of claims 29 to 34, characterized in that the inlet to the acceleration zone is surmounted by an atmosphere control chamber supplied with controlled atmosphere.

37. Nozzle according to one of claims 29 to 36, characterized in that the walls of the passage make an angle of the order of 5° with the median plane.

38. Nozzle according to one of claims 18 to 37, characterized in that the nozzle nose is tapered.

39. Nozzle according to one of claims 18 to 38, characterized in that the nozzle nose has a thermal protection and cooling means.

40. Nozzle according to one of claims 18 to 39, characterized in that the width of the passage is of the order of 1/50 to 1/100 of its height.

41. Product formed of a substrate covered with a coating produced by deposition of a powder according to the process of one of claims 1 to 14, characterized in that the variations in thickness of the coating are less than 50 Angstrom units and even of the order of 30 to 40 Angstrom units.

42. Product according to claim 41, characterized in that, the substrate being a glass sheet, the uniformity of the coating is such that the variations in luminous transmission are of the order of 1%.

43. Product according to one of claims 41 or 42, characterized in that the coating is a layer of $SnO_2$ doped with fluorine, the dominant wavelength of which under illumination by the source C is 480 nm in reflection and 575 nm in transmission, of uniform colour.

44. Product according to one of claims 41 or 42, characterized in that it possesses a coating having a thickness less than 0.1 micron and even of the order of 400 to 800 Angstrom units.

45. Product according to claim 44, characterized in that the coating is a continuous layer of $TiO_2$ having a thickness of the order of 500 Angstrom units.

46. Product according to one of claims 41 or 42, characterized in that, the substrate being a glass sheet, notably 4 mm in thickness, the deposited layer being of tin oxide doped with fluorine, the emissivity is at maximum of the order of 0.3 and the luminous transmission is greater than 75%, enabling it to be used as an automobile windscreen and in general as a window pane for automobiles.

47. Utilization of the product according to one of claims 41 to 46 as an anti-heat or heat-reflecting wall, notably as a window glass for a cooking stove or similar equipment, or for an insulating tank.

FIG.1

FIG.4

FIG.2

FIG.5

FIG.3